(19) Europäisches Patentamt
European Patent Office
Office européen des brevets

(11) **EP 3 875 914 B1**

(12) **FASCICULE DE BREVET EUROPEEN**

(45) Date de publication et mention
de la délivrance du brevet:
**27.07.2022 Bulletin 2022/30**

(21) Numéro de dépôt: **21160162.0**

(22) Date de dépôt: **02.03.2021**

(51) Classification Internationale des Brevets (IPC):
**G01D 4/00** *(2006.01)* **G01D 3/08** *(2006.01)*

(52) Classification Coopérative des Brevets (CPC):
**G01D 3/08; G01D 4/002;** G01D 2204/22

(54) **DETECTION D'UNE DERIVE METROLOGIQUE ANORMALE D'UN COMPTEUR DE FLUIDE**

ERKENNUNG EINER ABNORMALEN MESSTECHNISCHEN ABWEICHUNG EINES FLUIDMESSGERÄTES

DETECTION OF AN ABNORMAL METROLOGICAL SHIFT OF A FLUID COUNTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2020 FR 2002244**

(43) Date de publication de la demande:
**08.09.2021 Bulletin 2021/36**

(73) Titulaire: **Sagemcom Energy & Telecom SAS 92500 Rueil-Malmaison (FR)**

(72) Inventeur: **TEBOULLE, Henri 92500 RUEIL MALMAISON (FR)**

(74) Mandataire: **Lavaud, Thomas et al Cabinet Boettcher 16, rue Médéric 75017 Paris (FR)**

(56) Documents cités:
**WO-A1-2019/052893 WO-A2-2014/203246 US-A1- 2018 143 056**

## Description

L'invention concerne le domaine des compteurs de fluide communicants.

ARRIERE PLAN DE L'INVENTION

Les compteurs d'eau modernes, dits « communicants », remplacent progressivement les compteurs d'eau traditionnels.

Un compteur d'eau communicant permet bien sûr de mesurer la quantité d'eau consommée par l'installation d'un client pour facturer cette consommation au client. Un compteur d'eau communicant permet aussi de produire, de transmettre, de recevoir et d'analyser des données diverses (relatives par exemple à la consommation de l'installation, à l'état du réseau de distribution d'eau, ou bien au fonctionnement du compteur), de manière à mettre en œuvre de nouvelles fonctionnalités. Ces nouvelles fonctionnalités bénéficient à la fois au distributeur d'eau, au gestionnaire du réseau et au client.

Un compteur d'eau communicant permet ainsi par exemple au client d'améliorer le suivi de sa consommation et donc de mieux la maîtriser, d'optimiser sa facturation, de ne pas être dérangé par les interventions des opérateurs grâce au relevé à distance, etc.

Dans les compteurs d'eau communicants, tout comme d'ailleurs dans les compteurs d'eau traditionnels, il convient d'assurer que le dispositif de mesure (ultrasonique par exemple) conserve au cours du temps la précision spécifiée au moment de sa conception. Il est cependant très compliqué de détecter l'apparition de dérives métrologiques anormales dans le dispositif de mesure d'un compteur d'eau. Or, une telle dérive métrologique anormale peut avoir des conséquences financières significatives pour le client, voire même, inversement, pour le distributeur d'eau si le phénomène touche un grand nombre de compteurs.

US2018/143056 A1, WO2019/052893 A1 et WO2014/203246 A2 divulguent des systèmes avec un compteur d'eau avec lequel une fuite dans une installation peut être détectée.

OBJET DE L'INVENTION

L'invention a pour objet de détecter une dérive métrologique anormale d'un dispositif de mesure d'un compteur de fluide.

RESUME DE L'INVENTION

En vue de la réalisation de ce but, on propose un procédé de surveillance d'un dispositif de mesure d'un compteur de fluide agencé pour produire des mesures d'une consommation globale d'une installation, comportant les étapes de :

- identifier, en analysant les mesures de la consommation globale, un mécanisme de l'installation qui fonctionne selon des cycles de fonctionnement présentant chacun une durée de cycle sensiblement constante et au cours de chacun desquels une consommation individuelle du mécanisme est sensiblement constante ;
- détecter les cycles de fonctionnement du mécanisme et, pour chaque cycle de fonctionnement détecté, mesurer une durée du cycle et une consommation individuelle du mécanisme ;
- détecter, en fonction d'une évolution dans le temps de la consommation individuelle du mécanisme, une dérive métrologique anormale du dispositif de mesure du compteur de fluide.

Le procédé de surveillance selon l'invention consiste donc à identifier dans l'installation, en utilisant les mesures de la consommation globale, un mécanisme bien particulier (par exemple une chasse d'eau) qui, chaque fois qu'il est activé, présente une consommation individuelle sensiblement constante. Le procédé de surveillance consiste alors à suivre l'évolution dans le temps des mesures de la consommation individuelle, qui devraient normalement être sensiblement constantes en l'absence de dérive du dispositif de mesure, et à détecter une dérive anormale du dispositif de mesure du compteur de fluide lorsque ces mesures dérivent anormalement. Le procédé de surveillance est donc particulièrement astucieux : on détecte une dérive du compteur sans surveiller directement le dispositif de mesure, mais en utilisant un mécanisme « étalon » identifié dans l'installation dont le compteur de fluide mesure la consommation.

On propose de plus un procédé de surveillance tel que précédemment décrit, dans lequel l'identification du mécanisme comprend les étapes de :

- détecter, dans les mesures de la consommation globale, un cycle de fonctionnement de référence ayant une durée de cycle et une consommation individuelle qui sont sensiblement égales à une durée de cycle pré-renseignée et à une consommation individuelle pré-renseignée correspondant à un mécanisme connu ;

- associer au mécanisme une durée de cycle de référence égale à la durée de cycle dudit cycle de fonctionnement de référence et une consommation individuelle de référence égale à la consommation individuelle dudit cycle de fonctionnement de référence.

On propose en outre un procédé de surveillance tel que précédemment décrit, dans lequel la détection d'un cycle de fonctionnement comprend les étapes de détecter une succession d'une première phase de stabilité, d'une phase d'augmentation et d'une deuxième phase de stabilité de la consommation globale de l'installation.

On propose aussi un procédé de surveillance tel que précédemment décrit, comprenant en outre l'étape de détecter un changement du mécanisme à partir d'une variation de la durée de cycle et/ou d'une variation de la consommation individuelle du mécanisme.

On propose de plus un procédé de surveillance tel que précédemment décrit, dans lequel un remplacement à l'identique du mécanisme est détecté lorsque, à partir d'un premier temps de changement, la durée de cycle n'est plus comprise dans un premier intervalle centré sur la durée de cycle de référence et la consommation individuelle n'est plus comprise dans un deuxième intervalle centré sur la consommation individuelle de référence.

On propose en outre un procédé de surveillance tel que précédemment décrit, dans lequel un remplacement du mécanisme par un mécanisme différent est détecté lorsque, à partir d'un deuxième temps de changement, la durée de cycle n'est plus comprise dans un troisième intervalle centré sur la durée de cycle de référence et la consommation individuelle n'est plus comprise dans un quatrième intervalle centré sur la consommation individuelle de référence, le troisième intervalle et le quatrième intervalle étant plus étendus que le premier intervalle et le deuxième intervalle.

On propose aussi un procédé de surveillance tel que précédemment décrit, dans lequel la détection de la dérive métrologique anormale comprend les étapes de :

- évaluer une fonction de dérive représentative d'une dérive de la consommation individuelle du mécanisme ;
- détecter une dérive métrologique anormale lorsque la fonction de dérive demeure inférieure ou égale à un seuil de dérive prédéterminé pendant une durée prédéterminée, et que, à partir d'un temps de dérive, sous l'effet de la dérive métrologique anormale, la consommation individuelle n'est plus comprise dans un cinquième intervalle centré sur la consommation individuelle de référence.

On propose aussi un procédé de surveillance tel que précédemment décrit, dans lequel la fonction de dérive est une moyenne des pentes de segments qui relient chacun deux points de mesure successifs, chaque point de mesure ayant pour coordonnées le temps auquel une mesure de consommation individuelle a été réalisée, et ladite mesure de consommation individuelle.

On propose aussi un procédé de surveillance tel que précédemment décrit, dans lequel le mécanisme est une chasse d'eau.

On propose aussi un compteur de fluide comportant un dispositif de mesure et un module de traitement agencé pour mettre en œuvre le procédé de surveillance tel que précédemment décrit.

On propose aussi un programme d'ordinateur comprenant des instructions qui conduisent le compteur de fluide tel que précédemment décrit à exécuter les étapes du procédé de surveillance tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig. 1] la figure 1 représente un graphique sur lequel est représentée une courbe de mesures d'une consommation globale d'une installation ;

[Fig. 2] la figure 2 représente un graphique sur lequel est représentée une courbe de mesures d'une consommation individuelle d'une chasse d'eau, alors qu'une dérive métrologique anormale se produit dans le compteur d'eau.

DESCRIPTION DETAILLEE DE L'INVENTION

Le procédé de surveillance selon l'invention est ici mis en œuvre pour détecter une dérive métrologique anormale d'un dispositif de mesure d'un compteur d'eau.

Le compteur d'eau mesure la consommation globale en eau d'une installation qui est située par exemple dans une habitation.

Outre le dispositif de mesure, le compteur d'eau comporte un module de traitement. Le module de traitement comprend au moins un composant de traitement adapté à exécuter des instructions d'un programme pour mettre en œuvre les étapes du procédé de surveillance qui vont être décrites ci-après. Le composant de traitement est par exemple un processeur, un microcontrôleur, ou bien un circuit logique programmable tel qu'un FPGA (pour *Field Programmable Gate Arrays*) ou un ASIC (pour *Application Specific Integrated Circuit*).

L'invention consiste tout d'abord à identifier dans l'installation, en analysant les mesures de consommation globale de l'installation produites par le dispositif de mesure du compteur d'eau, un mécanisme particulier consommateur d'eau. Ce mécanisme fonctionne selon des cycles de fonctionnement qui présentent chacun une durée de cycle sensiblement constante et au cours de chacun desquels la consommation individuelle du mécanisme est sensiblement constante. Puis, l'invention consiste à détecter les cycles de fonctionnement du mécanisme, et à mesurer pour chaque cycle de fonctionnement détecté la consommation individuelle du mécanisme. L'invention consiste alors à détecter une dérive métrologique anormale lorsque les mesures de la consommation individuelle dérivent dans le temps de manière anormale, alors qu'elles devraient être sensiblement constantes puisque la consommation individuelle du mécanisme au cours de chaque cycle de fonctionnement est sensiblement constante.

On comprend donc que l'on distingue ici la consommation globale de l'ensemble de l'installation, qui est mesurée par le compteur d'eau, et la consommation individuelle du mécanisme, qui est mesurée d'une manière décrite ci-après.

Le mécanisme en question est ici une chasse d'eau. On sait en effet qu'une chasse d'eau classique consomme typiquement un volume d'eau sensiblement constant, compris entre 9 litres et 12 litres, et que la durée de remplissage de la cuve d'une chasse d'eau classique est sensiblement constante et est de l'ordre de quelques dizaines de secondes une fois que la chasse d'eau a été enclenchée.

Le procédé de surveillance consiste donc tout d'abord à identifier la chasse d'eau à partir des mesures de la consommation globale qui sont réalisées par le compteur d'eau.

Pour cela, le composant de traitement acquiert les mesures de la consommation globale, puis détecte un cycle de fonctionnement de référence ayant une durée de cycle et une consommation individuelle qui sont respectivement sensiblement égales à une durée de cycle pré-renseignée et à une consommation individuelle pré-renseignée correspondant à un mécanisme connu, ici à une chasse d'eau classique, de type connu.

La durée de cycle pré-renseignée et la consommation individuelle pré-renseignée correspondent respectivement à la durée de remplissage de la cuve d'une chasse d'eau et au volume d'eau sensiblement constant qui viennent d'être évoqués. Par « pré-renseignées », on entend que ces données ont été préalablement renseignées puis mémorisées, soit dans le compteur d'eau, soit dans un autre système (concentrateur de données, Système d'Information, etc.), auquel cas ces données ont été ensuite acquises par le compteur d'eau.

Le composant de traitement du compteur d'eau associe alors à la chasse d'eau une durée de cycle de référence égale à la durée de cycle de ce cycle de fonctionnement de référence et une consommation individuelle de référence égale à la consommation individuelle de ce cycle de fonctionnement de référence. Ces mesures de référence forment un couple de référence.

La détection d'un cycle de fonctionnement dans les mesures de la consommation globale et donc, en particulier, du cycle de fonctionnement de référence, consiste à détecter une succession d'une première phase de stabilité, d'une phase d'augmentation et d'une deuxième phase de stabilité de la consommation globale de l'installation.

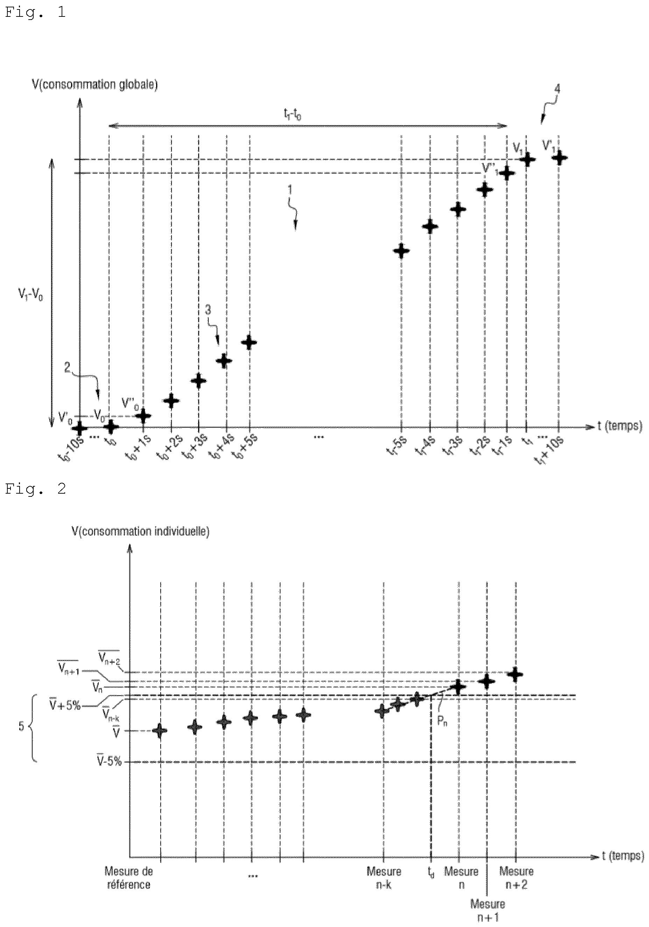

On distingue, dans les mesures de la consommation globale de la figure 1, un cycle de fonctionnement de référence 1.

La détection de la première phase de stabilité 2 et de la phase d'augmentation 3 consiste à détecter une absence de consommation globale d'eau dans l'installation pendant au moins une durée prédéterminée, suivie d'une hausse relativement rapide de la consommation globale.

On cherche donc à identifier un temps $t_0$ qui vérifie à la fois :

$$V_0 - V'_0 \leq \Delta V_0,$$

et aussi :

$$V''_0 - V_0 > \Delta V'_0,$$

où $V_0$ est la consommation globale de l'installation jusqu'au au temps $t_0$, $V'_0$ est la consommation globale jusqu'au au temps $t_0 - \Delta t_0$, et $V''_0$ est la consommation globale jusqu'au temps $t_0 + \Delta t'_0$.

On a ici :

$\Delta t_0$ = 10s ;
$\Delta t'_0$ = 1s ;
$\Delta V_0$ = 0,11 ;
$\Delta V'_0$ = 0,11.

La première phase de stabilité 2 s'étend donc ici entre $t_0$-10s et $t_0$. La phase d'augmentation 3 débute à partir de $t_0$, c'est-à-dire après avoir constaté au moins 10 secondes de stabilité de la consommation globale, et inclut l'intervalle qui s'étend entre $t_0$ et $t_0$+1s.

La détection de la deuxième phase de stabilité 4 consiste alors à détecter à nouveau une stabilité de la consommation d'eau globale suite à la phase d'augmentation 3.

On cherche donc à identifier un temps $t_1$ qui vérifie à la fois :

$$V'_1 - V_1 \leq \Delta V_1,$$

et aussi :

$$V_1 - V''_1 > \Delta V'_1,$$

où $V_1$ est la consommation globale jusqu'au temps $t_1$, $V'_1$ est la consommation globale jusqu'au temps $t_1$+$\Delta t_1$, et $V''_1$ est la consommation globale jusqu'au temps $t_1$-$\Delta t'_1$.

On a ici :

$\Delta t_1$ = 10s ;
$\Delta t'_1$ = 1s ;
$\Delta V_1$ = 0,11 ;
$\Delta V'_1$ = 0,11.

Le composant de traitement calcule alors la différence entre la consommation globale $V_1$ (correspondant à la consommation jusqu'à la deuxième phase de stabilité 4) et la consommation globale $V_0$ (correspondant à la consommation jusqu'à la première phase de stabilité 2), pour obtenir une mesure de la consommation individuelle du cycle de fonctionnement 1. La durée entre $t_1$ et $t_0$ correspond à la durée de cycle de fonctionnement.

Le composant de traitement compare alors la consommation individuelle $V_1$-$V_0$ et la durée de cycle $t_1$-$t_0$ avec la consommation individuelle pré-renseignée et la durée de cycle pré-renseignée.

Ici, on a :

$$\mathtt{V_1 - V_0 \ = \ 9,81 \ et \ t_1 - t_0 \ = \ 38s.}$$

Ces données sont sensiblement égales aux données pré-renseignées et correspondent bien à une chasse d'eau : le cycle de fonctionnement 1 est bien un cycle de fonctionnement de référence, défini par une durée de cycle de référence ($t_1$-$t_0$) et une consommation individuelle de référence ($V_1$-$V_0$). Le composant de traitement associe à la chasse d'eau la durée de cycle de référence et la consommation individuelle de référence.

Avantageusement, on prévoit, pour valider et consolider les mesures de référence, de les répéter plusieurs fois dans des conditions similaires, par exemple 5 fois. Les mesures de référence sont validées si les variations de la durée de cycle de référence et de la consommation individuelle de référence sont faibles.

On nomme $\bar{t}$ la moyenne des 5 durées de cycle de référence mesurées et $\bar{V}$ la moyenne des 5 consommations individuelles de référence mesurées.

On considère que la mesure de la durée de cycle de référence est confirmée si les 5 mesures appartiennent à un premier intervalle de référence centré sur $\bar{t}$ et défini par $\bar{t}$ + 5%.

On considère que la mesure de la consommation individuelle de référence est confirmée si les 5 mesures appartiennent à un deuxième intervalle de référence centré sur $\bar{V}$ et défini par $\bar{V} \pm$ 5%.

Une fois que les mesures sont confirmées, le composant de traitement définit comme durée de cycle de référence « confirmée » la moyenne $\bar{t}$ des durées de cycle de référence, et comme consommation individuelle de référence « confirmée » la moyenne $\bar{V}$ des consommations individuelles de référence. Le composant de traitement associe le couple de référence $(\bar{V}, \bar{t})$ à la chasse d'eau.

On note que, dans le cas de la présence d'un autre mécanisme (ou de plusieurs autres mécanismes), par exemple dans le cas de la présence d'une deuxième chasse d'eau ou bien dans le cas où la chasse d'eau comprend un mécanisme à petit rinçage et un mécanisme à grand rinçage, le composant de traitement identifie ces autres mécanismes de manière similaire et leur associe de manière similaire une durée de cycle de référence $\overline{t}$ et une consommation individuelle de référence $\overline{V}$.

Le composant de traitement détecte alors, au fil du temps, des cycles de fonctionnement « courants » de la chasse d'eau et, pour chaque cycle de fonctionnement détecté, mesure la durée de cycle et la consommation individuelle de la chasse d'eau. La détection de ces cycles de fonctionnement est réalisée comme la détection du cycle de fonctionnement de référence (détection de la première phase de stabilité, de la phase d'augmentation et de la deuxième phase de stabilité). Les mesures de la durée de cycle et de la consommation individuelle sont aussi réalisées comme pour la durée de cycle de référence et la consommation individuelle de référence.

La détection des cycles de fonctionnement permet tout d'abord de détecter un changement de la chasse d'eau à partir d'une variation de la durée de cycle et/ou d'une variation de la consommation individuelle de la chasse d'eau.

Le changement de la chasse d'eau détecté peut être soit un remplacement à l'identique de la chasse d'eau (ou une rénovation de celle-ci), soit un remplacement de la chasse d'eau par une chasse d'eau différente. Le composant de traitement détecte et distingue ces deux types de changement.

Un remplacement à l'identique de la chasse d'eau est détecté lorsque, à partir d'un premier temps de changement, la durée de cycle n'est plus comprise dans un premier intervalle centré sur la durée de cycle de référence et la consommation individuelle n'est plus comprise dans un deuxième intervalle centré sur la consommation individuelle de référence (alors qu'elles étaient comprises précédemment dans ces intervalles).

Un remplacement de la chasse d'eau par un mécanisme différent est détecté lorsque, à partir d'un deuxième temps de changement, la durée de cycle n'est plus comprise dans un troisième intervalle centré sur la durée de cycle de référence et la consommation individuelle n'est plus comprise dans un quatrième intervalle centré sur la consommation individuelle de référence (alors qu'elles étaient comprises précédemment dans ces intervalles). Le troisième intervalle et le quatrième intervalle sont plus étendus que le premier intervalle et le deuxième intervalle.

Le premier intervalle est par exemple défini par $\overline{t} \pm 5\%$, le deuxième intervalle par $\overline{V} \pm 5\%$, le troisième intervalle par $\overline{t} \pm 10\%$ et le quatrième intervalle par $\overline{V} \pm 10\%$.

Ainsi, dans le cas où la durée de cycle et la consommation individuelle sont incluses pendant une certaine durée et avec une certaine marge respectivement dans le premier intervalle $\overline{t} \pm 5\%$ et dans le deuxième intervalles $\overline{V} \pm 5\%$, et que, subitement, la durée de cycle et la consommation individuelle se trouvent hors du premier intervalle et du deuxième intervalle mais toujours dans le troisième intervalle $\overline{t} \pm 10\%$ et dans le quatrième intervalle $\overline{V} \pm 10\%$, le composant de traitement détecte un remplacement à l'identique de la chasse d'eau.

Le composant de traitement détermine alors une nouvelle durée de cycle de référence $\overline{t}'$ et une nouvelle consommation individuelle de référence $\overline{V}'$, et remplace le couple de référence $(\overline{V}, \overline{t})$ par le nouveau couple de référence $(\overline{V}', \overline{t}')$.

Par contre, dans le cas où la durée de cycle et la consommation individuelle sont incluses pendant une certaine durée et avec une certaine marge dans le premier intervalle $\overline{t} \pm 5\%$ et dans le deuxième intervalle $\overline{V} \pm 5\%$, et que, subitement, la durée de cycle et la consommation individuelle se trouvent hors du troisième intervalle $\overline{t} \pm 10\%$ et du quatrième intervalle $\overline{V} \pm 10\%$, le composant de traitement détecte un remplacement de la chasse d'eau par une chasse d'eau différente.

Le composant de traitement détermine alors une nouvelle durée de cycle de référence $\overline{t}'$ et une nouvelle consommation individuelle de référence $\overline{V}'$, et créé donc le nouveau couple de référence $(\overline{V}', \overline{t}')$ tout en conservant le couple de référence existant $(\overline{V}, \overline{t})$.

Le composant de traitement peut ainsi mémoriser une ou plusieurs mesures de référence pour une même installation par l'intermédiaire des couples $(\overline{V}, \overline{t})$ et les remettre à jour en temps réel.

La détection des cycles de fonctionnement permet aussi de détecter une dérive métrologique anormale du dispositif de mesure du compteur d'eau. Lorsque le composant de traitement a déterminé au moins un couple de référence $(\overline{V}, \overline{t})$ et qu'il a mémorisé ce couple de référence, le compteur d'eau se place dans un mode de veille (ce qui ne l'empêche pas de rechercher en parallèle d'autres mécanismes non encore détectés et/ou des changements de mécanismes identifiés).

Lorsque le compteur d'eau se trouve dans le mode de veille, il tente de détecter une dérive métrologique anormale via l'évolution de la consommation de fluide individuelle de la chasse d'eau obtenue grâce aux mesures de la consommation globale.

Le mode de veille consiste, pour chacun des mécanismes identifiés, à mesurer à nouveau 5 périodes consécutives correspondant à l'utilisation d'un même mécanisme. On obtient de la sorte des couples successifs notés $(\overline{V}_n, \overline{t}_n)$ pour un même mécanisme qui a comme couple de référence $(\overline{V}, \overline{t})$ et que le composant de traitement n'a jamais pris en défaut de changement (remplacement à l'identique ou remplacement par un mécanisme différent).

La détection de la dérive métrologique anormale consiste tout d'abord à évaluer une fonction de dérive représentative d'une dérive de la consommation individuelle de la chasse d'eau.

La fonction de dérive est ici la suivante :

$$P_n = \frac{1}{k} \sum_{i=0}^{i=k-1} \overline{(V_{n-i}} - \overline{V}_{n-i-1})/T_{n-i}$$

$T_{n-i}$ étant le temps écoulé entre les mesures $\overline{V}_{n-i}$ et $\overline{V}_{n-i-1}$.

La fonction de dérive est donc une moyenne des pentes des segments qui relient chacun deux points de mesure successifs, chaque point de mesure ayant pour coordonnées le temps auquel une mesure de consommation individuelle a été réalisée, et ladite mesure de consommation individuelle.

La fonction de dérive $P_n$ est visible sur la figure 2.

Le composant de traitement détecte une dérive métrologique anormale lorsque la fonction de dérive demeure inférieure ou égale à un seuil de dérive prédéterminé pendant une durée de dérive prédéterminée relativement longue (on détecte donc tout d'abord une dérive lente), et que, à partir d'un temps de dérive $t_d$, sous l'effet de la dérive, la consommation individuelle n'est plus comprise dans un cinquième intervalle 5 centré sur la consommation individuelle de référence $\overline{V}$.

Ainsi, on détecte une dérive métrologique anormale lorsque la fonction de dérive $P_n$ est telle que :

$P_n \le S_d$, en supposant que k est suffisamment élevé pour que :

$$\sum_{i=0}^{i=k-1} T_{n-i} \ge D_d \ ,$$

et que sous l'effet de la dérive courante, la consommation individuelle n'est plus comprise dans le cinquième intervalle 5.

$S_d$ est le seuil de dérive prédéterminé, qui est par exemple égal à 0,11/mois.

$D_d$ est la durée de dérive prédéterminée, par exemple égale à 3 mois

Le cinquième intervalle 5 est ici défini par $\overline{V} \pm 5\%$.

Avantageusement, on s'assure qu'au moins trois valeurs consécutives ($\overline{V}_n$, $\overline{V}_{n+1}$, $\overline{V}_{n+2}$) de la consommation individuelle ne sont plus comprises dans le cinquième intervalle 5 pour détecter la dérive métrologique anormale.

On note qu'il est possible de déduire $P_{n+1}$ de $P_n$ par la formule :

$$P_{n+1} = P_n + \frac{1}{k} \times \left[ \frac{\overline{(V_{n+1}} - \overline{V_n})}{T_{n+1}} - \frac{\overline{(V_{n-k+1}} - \overline{V_{n-k}})}{T_{n-k+1}} \right].$$

On évite ainsi d'utiliser la formule de $P_n$ qui a été décrite plus tôt, ce qui simplifie les calculs et donc les ressources du composant de traitement utilisées pour mettre en œuvre le procédé de surveillance.

Lorsque le compteur d'eau a détecté une dérive métrologique anormale, il remonte un message d'anomalie au Système d'Information.

Bien entendu, l'invention n'est pas limitée au mode de réalisation décrit mais englobe toute variante entrant dans le champ de l'invention telle que définie par les revendications.

L'invention n'est pas nécessairement mise en œuvre dans le compteur de fluide, mais pourrait être mise en œuvre entièrement ou partiellement dans un ou plusieurs autres équipements : concentrateur de données, compteur de quartier, serveur du Système d'Information, etc.

Le mécanisme utilisé comme référence n'est pas nécessairement une chasse d'eau. Tout mécanisme, qui fonctionne selon des cycles de fonctionnement présentant chacun une durée de cycle sensiblement constante et au cours de chacun desquels une consommation individuelle du mécanisme est sensiblement constante, pourrait être utilisé. Le mécanisme pourrait être par exemple un système d'arrosage automatique.

Le fluide dont la consommation est mesurée par le compteur de fluide n'est pas nécessairement de l'eau, mais pourrait être un autre liquide, un gaz, du pétrole, etc.

# EP 3 875 914 B1

## Revendications

1. Procédé de surveillance d'un dispositif de mesure d'un compteur de fluide agencé pour produire des mesures d'une consommation globale d'une installation, comportant les étapes de :

   - identifier, en analysant les mesures de la consommation globale, un mécanisme de l'installation qui fonctionne selon des cycles de fonctionnement (1) présentant chacun une durée de cycle ($t_1$-$t_0$) sensiblement constante et au cours de chacun desquels une consommation individuelle ($V_1$-$V_0$) du mécanisme est sensiblement constante ;
   - détecter les cycles de fonctionnement du mécanisme et, pour chaque cycle de fonctionnement détecté, mesurer une durée du cycle et une consommation individuelle du mécanisme ;
   - détecter, en fonction d'une évolution dans le temps de la consommation individuelle du mécanisme, une dérive métrologique anormale du dispositif de mesure du compteur de fluide.

2. Procédé de surveillance selon la revendication 1, dans lequel l'identification du mécanisme comprend les étapes de :

   - détecter, dans les mesures de la consommation globale, un cycle de fonctionnement de référence (1) ayant une durée de cycle et une consommation individuelle qui sont sensiblement égales à une durée de cycle pré-renseignée et à une consommation individuelle pré-renseignée correspondant à un mécanisme connu ;
   - associer au mécanisme une durée de cycle de référence ($\bar{t}$) égale à la durée de cycle dudit cycle de fonctionnement de référence et une consommation individuelle de référence ($\bar{V}$) égale à la consommation individuelle dudit cycle de fonctionnement de référence.

3. Procédé de surveillance selon l'une des revendications précédentes, dans lequel la détection d'un cycle de fonctionnement (1) comprend les étapes de détecter une succession d'une première phase de stabilité (2), d'une phase d'augmentation (3) et d'une deuxième phase de stabilité (4) de la consommation globale de l'installation.

4. Procédé de surveillance selon l'une des revendications précédentes, comprenant en outre l'étape de détecter un changement du mécanisme à partir d'une variation de la durée de cycle et/ou d'une variation de la consommation individuelle du mécanisme.

5. Procédé de surveillance selon la revendication 4, dans lequel un remplacement du mécanisme par un mécanisme identique est détecté lorsque, à partir d'un premier temps de changement, la durée de cycle n'est plus comprise dans un premier intervalle centré sur la durée de cycle de référence et la consommation individuelle n'est plus comprise dans un deuxième intervalle centré sur la consommation individuelle de référence.

6. Procédé de surveillance selon la revendication 5, dans lequel un remplacement du mécanisme par un mécanisme différent est détecté lorsque, à partir d'un deuxième temps de changement, la durée de cycle n'est plus comprise dans un troisième intervalle centré sur la durée de cycle de référence et la consommation individuelle n'est plus comprise dans un quatrième intervalle centré sur la consommation individuelle de référence, le troisième intervalle et le quatrième intervalle étant plus étendus que le premier intervalle et le deuxième intervalle.

7. Procédé de surveillance selon l'une des revendications précédentes, dans lequel la détection de la dérive métrologique anormale comprend les étapes de :

   - évaluer une fonction de dérive ($P_n$) représentative d'une dérive de la consommation individuelle du mécanisme ;
   - détecter une dérive métrologique anormale lorsque la fonction de dérive demeure inférieure ou égale à un seuil de dérive prédéterminé pendant une durée prédéterminée, et que, à partir d'un temps de dérive ($t_d$), sous l'effet de la dérive métrologique anormale, la consommation individuelle n'est plus comprise dans un cinquième intervalle (5) centré sur la consommation individuelle de référence.

8. Procédé de surveillance selon la revendication 7, dans lequel la fonction de dérive est une moyenne des pentes de segments qui relient chacun deux points de mesure successifs, chaque point de mesure ayant pour coordonnées le temps auquel une mesure de consommation individuelle a été réalisée, et ladite mesure de consommation individuelle.

9. Procédé de surveillance selon l'une des revendications précédentes, dans lequel le mécanisme est une chasse d'eau.

8

10. Compteur de fluide comportant un dispositif de mesure et un module de traitement agencé pour mettre en œuvre le procédé de surveillance selon l'une des revendications précédentes.

11. Programme d'ordinateur comprenant des instructions qui conduisent le compteur de fluide selon la revendication 10 à exécuter les étapes du procédé de surveillance selon l'une des revendications 1 à 9.

12. Support d'enregistrement lisible par ordinateur, sur lequel est enregistré le programme d'ordinateur selon la revendication 11.

**Patentansprüche**

1. Überwachungsverfahren zur Überwachung einer Messvorrichtung eines Fluidzählers, die ausgebildet ist, um Messungen eines Gesamtverbrauchs einer Anlage zu erzeugen, umfassend die Schritte:

   - Identifizieren eines Mechanismus der Anlage durch Analysieren der Messungen des Gesamtverbrauchs, wobei der Mechanismus gemäß Betriebszyklen (1) funktioniert, die jeweils eine im Wesentlichen konstante Zyklusdauer (ti-to) aufweisen und während denen jeweils ein Einzelverbrauch ($V_1$-$V_0$) des Mechanismus im Wesentlichen konstant ist;
   - Erfassen der Betriebszyklen des Mechanismus und Messen einer Dauer des Zyklus und eines Einzelverbrauchs des Mechanismus für jeden erfassten Betriebszyklus;
   - Erfassen einer anormalen metrologischen Drift der Messvorrichtung des Fluidzählers in Abhängigkeit von einer zeitlichen Entwicklung des Einzelverbrauchs des Mechanismus.

2. Überwachungsverfahren nach Anspruch 1, bei dem die Identifizierung des Mechanismus die Schritte umfasst:

   - Erfassen eines Referenz-Betriebszyklus (1) in den Messungen des Gesamtverbrauchs, wobei der Referenz-Betriebszyklus eine Zyklusdauer und einen Einzelverbrauch hat, die im Wesentlichen gleich einer vorab angegebenen Zyklusdauer und einem vorab angegebenen Einzelverbrauch sind, die einem bekannten Mechanismus entsprechen;
   - Zuordnen einer Referenz-Zyklusdauer ($\overline{t}$), die gleich der Zyklusdauer des genannten Referenz-Betriebszyklus ist, und eines Referenz-Einzelverbrauchs ($\overline{V}$), der gleich dem Einzelverbrauch des genannten Referenz-Betriebszyklus ist, zum Mechanismus.

3. Überwachungsverfahren nach einem der vorhergehenden Ansprüche, bei dem das Erfassen eines Betriebszyklus (1) die Schritte des Erfassens einer Abfolge einer ersten Stabilitätsphase (2), einer Zuwachsphase (3) und einer zweiten Stabilitätsphase (4) des Gesamtverbrauchs der Anlage umfasst.

4. Überwachungsverfahren nach einem der vorhergehenden Ansprüche, ferner umfassend den Schritt des Erfassens eines Wechsels des Mechanismus anhand einer Veränderung der Zyklusdauer und/oder einer Veränderung des Einzelverbrauchs des Mechanismus.

5. Überwachungsverfahren nach Anspruch 4, bei dem ein Austausch des Mechanismus durch einen identischen Mechanismus erfasst wird, wenn ausgehend von einer ersten Wechselzeit die Zyklusdauer nicht mehr in einem ersten Intervall liegt, das auf die Referenz-Zyklusdauer zentriert ist, und der Einzelverbrauch nicht mehr in einem zweiten Intervall liegt, das auf den Referenz-Einzelverbrauch zentriert ist.

6. Überwachungsverfahren nach Anspruch 5, bei dem ein Austausch des Mechanismus durch einen anderen Mechanismus erfasst wird, wenn ausgehend von einer zweiten Wechselzeit die Zyklusdauer nicht mehr in einem dritten Intervall liegt, das auf die Referenz-Zyklusdauer zentriert ist, und der Einzelverbrauch nicht mehr in einem vierten Intervall liegt, das auf den Referenz-Einzelverbrauch zentriert ist, wobei das dritte Intervall und das vierte Intervall breiter als das erste Intervall und das zweite Intervall sind.

7. Überwachungsverfahren nach einem der vorhergehenden Ansprüche, bei dem das Erfassen der anormalen metrologischen Drift die Schritte umfasst:

   - Evaluieren einer Driftfunktion ($P_n$), die repräsentativ für eine Drift des Einzelverbrauchs des Mechanismus ist;
   - Erfassen einer anormalen metrologischen Drift, wenn die Driftunktion für eine vorbestimmte Dauer unter oder gleich einem vorbestimmten Driftschwellenwert bleibt und wenn ausgehend von einem Driftzeitpunkt ($t_d$) unter der Wirkung der anormalen metrologischen Drift der Einzelverbrauch nicht mehr in einem fünften Intervall (5) liegt, das auf den Referenz-Einzelverbrauch zentriert ist.

8.  Überwachungsverfahren nach Anspruch 7, bei dem die Driftfunktion ein Durchschnitt der Steigungen von Abschnitten ist, die jeweils zwei aufeinanderfolgende Messpunkte verbinden, wobei jeder Messpunkt als Koordinaten den Zeitpunkt hat, zu dem eine Einzelverbrauchsmessung durchgeführt wurde, und die genannte Einzelverbrauchsmessung.

9.  Überwachungsverfahren nach einem der vorhergehenden Ansprüche, bei dem der Mechanismus eine Wasserspülung ist.

10. Fluidzähler, umfassend eine Messvorrichtung und ein Verarbeitungsmodul, das ausgebildet ist, um das Überwachungsverfahren nach einem der vorhergehenden Ansprüche durchzuführen.

11. Computerprogramm, umfassend Anweisungen, die den Fluidzähler nach Anspruch 10 veranlassen, die Schritte des Überwachungsverfahrens nach einem der Ansprüche 1 bis 9 auszuführen.

12. Computerlesbarer Aufzeichnungsträger, auf dem das Computerprogramm nach Anspruch 11 gespeichert ist.

**Claims**

1.  A monitoring method for monitoring a measuring device of a fluid meter that is arranged to produce measurements of the overall consumption of an installation, the method comprising the steps of:

    • analyzing the overall consumption measurements to identify a mechanism in the installation that operates with operating cycles (1), each presenting a substantially constant cycle duration (ti-to) and during each of which the individual consumption ($V_1$-$V_0$) of the mechanism is substantially constant;
    • detecting the operating cycles of the mechanism and measuring a cycle duration and the individual consumption of the mechanism for each detected operating cycle;
    • detecting abnormal metrological drift of the measuring device of the fluid meter as a function of variation over time in the individual consumption of the mechanism.

2.  A monitoring method according to claim 1, wherein identifying the mechanism comprises the steps of:

    • detecting, in the overall consumption measurements, a reference operating cycle (1) having a cycle duration and an individual consumption that are substantially equal to a previously-input cycle duration and to a previously-input individual consumption corresponding to a known mechanism;
    • associating the mechanism with a reference cycle duration ($\bar{t}$) equal to the cycle duration of said reference operating cycle and with a reference individual consumption ($\bar{V}$) equal to the individual consumption of said reference operating cycle.

3.  A monitoring method according to claim 1 or claim 2, wherein detecting an operating cycle (1) comprises the steps of detecting, in the overall consumption of the installation, a succession of a first stable stage (2), of an increasing stage (3), and of a second stable stage (4).

4.  A monitoring method according to any preceding claim, further comprising a step of detecting a change of mechanism from a variation in the cycle duration and/or from a variation in the individual consumption of the mechanism.

5.  A monitoring method according to claim 4, wherein a replacement of the mechanism by an identical mechanism is detected when, starting from a first change time, the cycle duration no longer lies in a first interval centered on the reference cycle duration and the individual consumption no longer lies in a second interval centered on the reference individual consumption.

6.  A monitoring method according to claim 5, wherein replacement of the mechanism by a non-identical mechanism is detected when, from a second change time, the cycle duration no longer lies in a third interval centered on the reference cycle duration and the individual consumption no longer lies in a fourth interval centered on the reference individual consumption, the third interval and the fourth interval being wider than the first interval and the second interval.

7. A monitoring method according to any preceding claim, wherein detecting abnormal metrological drift comprises the steps of:

   • evaluating a drift function ($P_n$) representative of drift of the individual consumption of the mechanism;
   • detecting abnormal metrological drift when the drift function remains less than or equal to a predetermined threshold for a predetermined duration, and then, starting from a drift time ($t_d$) and under the effect of abnormal metrological drift, the individual consumption no longer lies in a fifth interval (5) centered on the reference individual consumption.

8. A monitoring method according to claim 7, wherein the drift function is an average of the slopes of segments, each connecting together two successive measurement points, each measurement point having as its coordinates the time at which an individual consumption measurement is taken, and said individual consumption measurement.

9. A monitoring method according to any preceding claim, wherein the mechanism is a flush.

10. A fluid meter including a measuring device and a processor module arranged to perform the monitoring method according to any preceding claim.

11. A computer program including instructions for causing the fluid meter according to claim 10 to execute the steps of the monitoring method according to any one of claims 1 to 9.

12. A computer readable storage medium having stored thereon the computer program according to claim 11.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018143056 A1
- WO 2019052893 A1
- WO 2014203246 A2